# EUROPEAN PATENT SPECIFICATION

(11) **EP 4 086 829 B1**
(45) Date of publication and mention of the grant of the patent: **07.10.2026**
(21) Application number: 20909919.1
(22) Date of filing: 31.12.2020
(51) Int. Cl.: G06Q 10/083, G01B 11/00, G01B 11/30, G06T 7/60

(54) **METHOD FOR DETECTING PACKAGE, APPARATUS, COMPUTING DEVICE, LOGISTICS SYSTEM AND STORAGE MEDIUM**
VERFAHREN ZUR ERKENNUNG EINER VERPACKUNG, VORRICHTUNG, RECHNERVORRICHTUNG, LOGISTIKSYSTEM UND SPEICHERMEDIUM
PROCÉDÉ DE DÉTECTION D'EMBALLAGE, APPAREIL, DISPOSITIF INFORMATIQUE, SYSTÈME DE LOGISTIQUE ET SUPPORT D'ENREGISTREMENT

(30) Priority: 31.12.2019 CN 201911413069
(43) Date of publication of application: 09.11.2022
(73) Proprietor: Hangzhou Hikrobot Co., Ltd., Hangzhou, Zhejiang 310051 (CN)
(72) Inventor: HU, Maobang, Hangzhou, Zhejiang 310051 (CN); GU, Rui, Hangzhou, Zhejiang 310051 (CN); ZHOU, Yang, Hangzhou, Zhejiang 310051 (CN)
(74) Representative: Epping - Hermann - Fischer
(86) International application number: PCT/CN2020/142175
(87) International publication number: WO 2021/136509

(56) References cited:
- CN-A- 104 020 095
- CN-A- 108 692 681
- CN-A- 109 029 253
- CN-A- 109 463 969
- CN-A- 109 584 157
- CN-A- 109 785 379
- KR-B1- 101 324 275
- US-A1- 2015 042 791
- US-A1- 2017 091 706
- US-A1- 2019 139 251

## Description

The present application claims the priority to a Chinese patent application No. 201911413069.6 filed with the China National Intellectual Property Administration on December 31, 2019 and entitled "METHOD FOR DETECTING PACKAGE, APPARATUS, COMPUTING DEVICE, LOGISTICS SYSTEM AND STORAGE MEDIUM".

### Technical Field

The present application relates to a technical field of logistics automation, in particular to a method and an apparatus for package detection, a computing device, a logistics system and a storage medium.

### Background

At present, in the application scenario of logistics, staff usually need to check the regularity of packages on the conveyor belt, so as to ensure that the transported packages have a high regularity and ensure the transportation efficiency. Among them, the regularity indicates a surface flatness of a package and a proximity of a loaded capacity of the package to the upper limit of capacity of the package.

However, the efficiency of manual detection of package regularity is not high, and the consistency of detection results is poor. Therefore, there is a lack of a technical solution to automatically detect the regularity of the package(s).

Further, US2015/042791A1 discloses systems and methods for enrollment of irregular shaped objects. The system includes an image capturing camera for capturing images of a package and a processing unit communicatively coupled to the camera. The processing unit may receive one or more images of the package from the camera. The processing unit may determine a first volume, a second volume, and the rectangle-score of the package. Responsive to determining the first volume, the second volume, and the rectangle-score of the package, a cuboid-score for the package is determined. Finally, the processing unit determines a shape of the package based on the cuboid-score.

US2017/091706A1 discloses systems and methods for monitoring the condition of packages at various checkpoints when the packages are being shipped. A package status monitoring system comprises a plurality of package analyzers, a package status server, and a database. The package analyzers are configured to analyze the condition of a package at multiple locations as the package is transported from a starting location to a final destination. Each package analyzer is configured to produce package status information regarding the condition of the package. The package status server is configured to receive the package status information from the multiple locations through a communications network. The database is configured to store the package status information received by the package status server. The package status server enables a remote user device to access the package status information.

### SUMMARY

The present application provides a method and an apparatus for package detection, a computing device, a logistics system and a storage medium, which can realize the automatic detection of package regularity, thereby improving package detection efficiency and the detection consistency.

The invention is set out in the appended claims.

According to an aspect of the present application, there is provided a method for package detection, including:
acquiring point cloud data of an outer surface of the package;
determining shape features of the package according to the point cloud data;
determining regularity of the package according to the shape features of the package, wherein the regularity indicates a surface flatness of the package and/or a proximity of a loaded capacity of the package to an upper limit of capacity of the package.

In some embodiments, the acquiring point cloud data of the outer surface of the package includes:
receiving a scanning result obtained by scanning the package on a conveyor belt by a point cloud data acquisition device;
determining the point cloud data according to the scanning result.

The determining shape features of the package according to the point cloud data includes at least one of the following steps:
determining a top surface flatness of the package according to the point cloud data, wherein the top surface flatness is used to characterize a smoothness of a top surface of the package;
determining a volume duty ratio of the package according to the point cloud data, wherein the volume duty ratio is a ratio of a volume of the package to a volume of the smallest circumscribed cuboid of the package;
determining an ideal volume ratio of the package according to the point cloud data, wherein the ideal volume ratio is a ratio of the volume of the package to the upper limit of capacity of the package;
determining an outline rectangle degree of the package according to the point cloud data, wherein the outline rectangle degree is a ratio of an area of a horizontal projection region of the package to an area of a smallest circumscribed rectangular region of the horizontal projection region.

The determining the regularity of the package according to the shape features of the package includes:
calculating a weighted sum of at least one shape feature among the top surface flatness, the volume duty ratio, the ideal volume ratio and the outline rectangle degree, and taking the weighted sum as the regularity of the package.

In some embodiments, determining the top surface flatness of the package according to the point cloud data includes:
determining a main direction of the point cloud data, wherein the main direction is used for reflecting an overall orientation of the point cloud data;
determining a target subset of the point cloud data, wherein an included angle between a normal direction of each point in the target subset and the main direction is smaller than an included angle threshold;
taking a ratio of the number of points in the target subset to the number of points in the point cloud data is as the top surface flatness.

In some embodiments, the determining the main direction of the point cloud data includes:
performing downsampling on the point cloud data to obtain sampled point cloud data;
determining a main direction of the sampled point cloud data.

In some embodiments, the determining the volume duty ratio of the package according to the point cloud data includes:
determining a shape model of the package according to the point cloud data;
determining the smallest circumscribed cuboid of the package according to the shape model of the package, and determining a volume of the cuboid;
determining the volume of the package according to the point cloud data;
calculating the volume duty ratio according to the volume of the cuboid and the volume of the package.

In some embodiments, the determining the volume of the package according to the point cloud data includes:
projecting the point cloud data into a predetermined plane to obtain projection points corresponding to the point cloud data;
performing grid processing on the projection points corresponding to the point cloud data to obtain a plurality of grids including the projection points;
calculating a volume corresponding to each grid, wherein the volume corresponding to each grid is a product of an area of this grid and a height of point cloud data projected to this grid;
taking the sum of volumes corresponding to the plurality of grids as the volume of the package.

In some embodiments, the determining the outline rectangle degree of the package according to the point cloud data includes:
determining a horizontal projection region of the point cloud data in a horizontal plane and determining an area of the horizontal projection region;
determining the smallest circumscribed rectangular region of the horizontal projection region and determining an area of the smallest circumscribed rectangular region;
taking a ratio of the area of the horizontal projection region to the area of the smallest circumscribed rectangular region as the outline rectangle degree.

In some embodiments, the determining the main direction of the point cloud data includes:
calculating a center point of the point cloud data, wherein coordinates of the center point are mean values of coordinates of the points in the point cloud data;
subtracting the coordinates of the center point from coordinates of respective points in the point cloud data to obtain point cloud data after center offset;
determining a first matrix and a second matrix composed of point cloud data after center offset, wherein the second matrix is a transposed matrix of the first matrix;
calculating a product of the first matrix and the second matrix to obtain a covariance matrix;
performing singular value decomposition on the covariance matrix, and taking an eigenvector with a largest eigenvalue as the main direction of the point cloud data.

According to an aspect of the present application, there is provided an apparatus for package detection, including:
an acquisition unit, configured for acquiring point cloud data of an outer surface of the package,
a feature extraction unit, configured for determining shape features of the package according to the point cloud data;
a regularity determination unit, configured for determining regularity of the package according to the shape features of the package, wherein the regularity indicates a surface flatness of the package and a proximity of a loaded capacity of the package to an upper limit of capacity of the package.

According to an aspect of the present application, there is provided a computing device, including a memory; a processor; a program stored in the memory and configured to be executed by the processor, the program including instructions for executing the method of package detection according to the present application.

According to an aspect of the present application, there is provided a storage medium storing a program, which includes instructions that, when executed by a computing device, cause the computing device to perform the method of package detection according to the present application.

According to an aspect of the present application, there is provided a logistics system, including a computing device; a conveyor belt; a point cloud data acquisition device, which is configured for acquiring point cloud data of a package on the conveyor belt.

According to an aspect of the present application, there is provided a computer program product including instructions, which, when run in a computer, causes the computer to execute the method for package detection of the present application.

To sum up, according to the package detection scheme of the present application, the shape features of the package can be acquired based on the point cloud data of the package, and the regularity can be determined according to the shape features. The package detection scheme can avoid the trouble of manually detecting the regularity of the package, and realize automatic detection of the regularity of the package by device, thereby improving the efficiency of the regularity detection of the package and the consistency of the detection results.

### Brief Description of the Drawings

In order to describe the technical solution of the embodiments of the present application and the prior art more clearly, drawings used in the embodiments and the prior art will be described briefly below. Obviously, the drawings described below are only for some embodiments of the present application, and those skilled in the art can obtain other drawings according to these drawings without any inventive efforts.
FIG. 1 shows a schematic diagram of a logistics system according to some embodiments of the present application;
FIG. 2A shows a flowchart of a method 200 for package detection according to some embodiments of the present application;
FIG. 2B shows a schematic diagram of a package according to some embodiments of the present application;
FIG. 2C shows a schematic diagram of point cloud data according to some embodiments of the present application;
FIG. 3 shows a flowchart of a method 300 for determining shape features of a package according to some embodiments of the present application;
FIG. 4 shows a flowchart of a method 400 for package detection according to some embodiments of the present application;
FIG. 5A shows a flowchart of a method 500 for determining a top surface flatness of a package according to some embodiments of the present application;
FIG. 5B shows a flowchart of determining a main direction of point cloud data according to some embodiments of the present application;
FIG. 6 shows a flowchart of a method 600 for determining a top surface flatness of a package according to some embodiments of the present application;
FIG. 7 shows a flowchart of a method 700 for determining a volume duty ratio according to some embodiments of the present application;
FIG. 8 shows a flowchart of a method 800 for determining volume of a package according to some embodiments of the present application;
FIG. 9 shows a flowchart of a method 900 for determining an outline rectangle degree according to some embodiments of the present application;
FIG. 10 shows a schematic diagram of an apparatus 1000 for package detection according to some embodiments of the present application;
FIG. 11 shows a schematic diagram of an apparatus 1100 for package detection according to some embodiments of the present application;
FIG. 12 shows a schematic diagram of a computing device according to some embodiments of the present application.

### Detailed Description

In order to make the objects, technical solutions, and advantages of the present application more clear, the present application will be further described in detail below with reference to the accompanying drawings and embodiments. Obviously, the embodiments described are only some of the embodiments of the present application instead of all of them. All other embodiments obtained by those of ordinary skills in the art based on the embodiments herein without any creative efforts are within the scope of the present application.

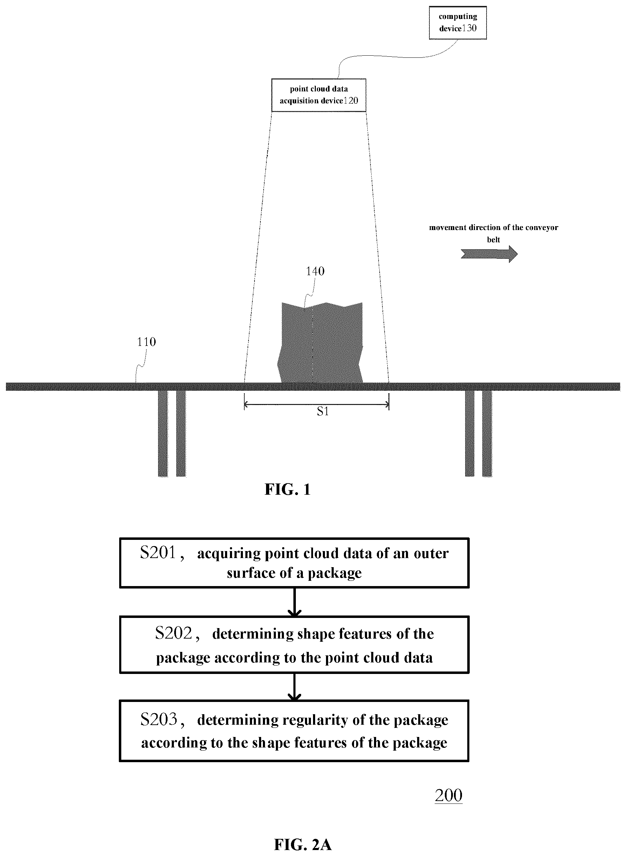

FIG. 1 shows a schematic diagram of a logistics system according to some embodiments of the present application. As shown in FIG. 1, the logistics system includes a conveyor belt 110, a point cloud data acquisition device 120 and a computing device 130.

The conveyor belt 110 conveys a package in a conveying direction. For example, the package 140 shown in FIG. 1 is conveyed. The conveying direction is as the direction from left to right in FIG. 1.

The point cloud data acquisition device 120 may be, for example, a laser radar or a depth camera. The depth camera is, for example, a structured light camera, a Time of Flight (ToF) camera, a Stereo camera, etc.

The cloud data acquisition device 120 may scan the package that pass through the conveyor belt and is located in a detection area S1, and output a scanning result to the computing device 130.

The computing device 130 may be, for example, a server, a notebook computer, a tablet computer, a handheld business communication device and the like. The computing device 130 may determine point cloud data of an outer surface of the package according to the scanning result from the point cloud data acquisition device 120. The point cloud data is a set of points on the outer surface of the package. The coordinates of each point in the point cloud data may be expressed as coordinates in the coordinate system of the point cloud data acquisition device 120 or coordinates in the world coordinate system.

The point cloud data is a set of points on which surfaces of the package depend on the installation position and angle of the point cloud data acquisition device 120, and the point cloud data is the set of points on the outer surface of the package that can be acquired by the point cloud data acquisition device 120. For example, the point cloud data acquisition device 120 is located above the conveyor belt 110, and scans the package in the direction perpendicular to the conveyor belt 110, so the point cloud data is the set of points on the upper surface of the package and points on the side protruding part, that is, the set of points on the outer surface of the package that can be acquired by the point cloud data acquisition device 120.

The computing device 130 may automatically detect regularity of the package according to the point cloud data of the package. Here, regularity indicates a surface flatness of the package and a proximity of a loaded capacity of the package to an upper limit of capacity of the package.

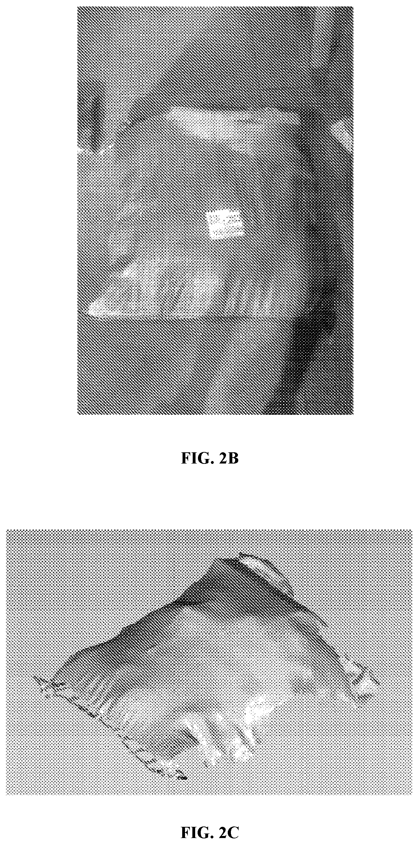

The method for detecting the regularity of the package will be described below with reference to FIG. 2.

FIG. 2A shows a flowchart of a method 200 for package detection according to some embodiments of the present application. The method 200 is performed by the computing device 130, for example.

As shown in FIG. 2A, at step S201, acquiring point cloud data of an outer surface of a package. For example, at step S201, the computing device may acquire point cloud data of an upper surface of the package. The upper surface of the package refers to the surface area of the package that can be observed from the top view angle.

In some embodiments, at step S201, the computing device may receive a scanning result obtained by scanning the package on the conveyor belt by the data acquisition device. According to the scanning result, the computing device may determine the point cloud data of the outer surface of the package at step S201. Each point in the cloud data may be considered as a point on the outer surface of the package. The information of each point in the point cloud data includes the position information of that point. The position information of a point may be expressed as coordinates in a three-dimensional coordinate system, for example. For example, FIG. 2B shows a schematic diagram of a package according to some embodiments of the present application. FIG. 2C shows a schematic diagram of point cloud data according to some embodiments of the present application. The point cloud data in FIG. 2C may reflect the shape features of the package in FIG. 2B.

At step S202, determining shape features of the package according to the point cloud data. Here, for example, the shape features may include at least one of top surface flatness, volume duty ratio, and ideal volume ratio and outline rectangle degree.

At step S203, determining regularity of the package according to the shape features of the package. The regularity indicates a surface flatness of the package and/or a proximity of a loaded capacity of the package to an upper limit of capacity of the package. Regularity, for example, is the weighted sum of various shape features of the package. For example, at step S203, the computing device may calculate the weighted sum of at least one shape feature among top surface flatness, volume duty ratio, and ideal volume ratio and outline rectangle degree, and take the weighted sum as the regularity of the package.

To sum up, according to the method 200 for package detection of the present application, the shape features of the package may be acquired based on the point cloud data of the package, and the regularity may be determined according to the shape features. The method 200 can avoid the trouble of manually detecting the regularity of the package, realize automatic detection of the regularity of the package by device, thereby improving the efficiency of the regularity detection of the package and the consistency of the detection results.

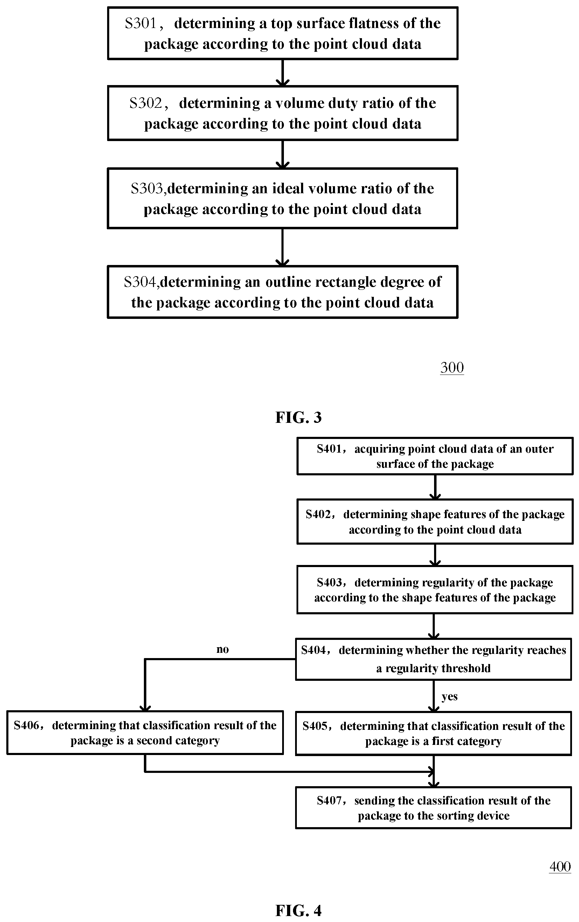

In some embodiments, step S202 may be implemented as the method 300. That is, the above step S202 may include the following steps:
As shown in FIG. 3, at step S301, determining a top surface flatness of the package according to the point cloud data.

The top surface flatness is used to characterize a smoothness of a top surface of the package. The top surface may be the surface region of the package that can be observed from the top view angle.

At step S302, determine a volume duty ratio of the package according to the point cloud data.

The volume duty ratio is a ratio of a volume of the package to a volume of the smallest circumscribed cuboid of the package. Here, the higher the volume duty ratio, the closer the package is to the cuboid. The computing device may determine the volume of the package according to the coordinates of respective points corresponding to the package represented by the point cloud data. The computing device may also determine the smallest circumscribed cuboid of the package according to the coordinates of respective points corresponding to the package represented by the point cloud data, and then determine the volume duty ratio according to the ratio of the volume of the package to the volume of the smallest circumscribed cuboid of the package.

At step S303, determining an ideal volume ratio of the package according to the point cloud data.

The ideal volume ratio is a ratio of the volume of the package to the upper limit of capacity of the package. Here, the higher the ideal volume ratio, the closer the loaded capacity of the package is to the upper limit of capacity of the package. The volume of the package may be determined according to the coordinates of respective points corresponding to the package represented by the point cloud data. The upper limit of capacity of the package may be acquired and stored in advance.

In one embodiment, when respective packages are packages of the same specification with uniform capacity, the computing device may acquire the capacity of each package in advance and store it for use in calculating the ideal volume ratio of the package. When respective packages is packages of different specifications with different capacities, the computing device may acquire the capacity of each package in advance and store it corresponding to an identifier of each package. When scanning the package, the point cloud data acquisition device 120 may also acquire the identifier of the package by scanning the QR code on the package, and then send it to the computing device. In this way, the computing device may determine the capacity of the package corresponding to the identifier according to the identifier, and then determine the ideal volume ratio of the package.

At step S304, determining an outline rectangle degree of the package according to the point cloud data.

The outline rectangle degree is a ratio of an area of the horizontal projection region of the package to an area of the smallest circumscribed rectangular region of the horizontal projection region. That is, the ratio of the area of the projection region of the package on the horizontal plane to the area of the smallest circumscribed rectangular area of the projection region on the horizontal plane. The higher the outline rectangle degree, the closer the shape of the package is to a cuboid or a cube, and the more regular the shape of the package is.

In one embodiment, the computing device may determine the projection region of the package on the horizontal plane according to the point cloud data of the package, and then may determine the smallest circumscribed rectangle of the projection region, and then calculate the ratio of the area of the horizontal projection region of the package to the area of the smallest circumscribed rectangular region of the horizontal projection region, to determine the outline rectangle degree of the package.

To sum up, the method 300 may analyze the shape features of the package from various angles, so that the regularity of the package can be determined by using various shape features. Since the shape features may include top surface flatness, volume duty ratio, and ideal volume ratio and/or outline rectangle degree, the calculated regularity of the package may indicate the surface flatness of the package and/or the proximity of the loaded capacity of the package to the upper limit of capacity of the package.

FIG. 4 shows a flowchart of a method 400 for package detection according to some embodiments of the present application. The method 400 is performed by the computing device 130, for example.

As shown in FIG. 4, at step S401, acquiring point cloud data of an outer surface of the package.

At step S402, determining shape features of the package according to the point cloud data.

At step S403, determining regularity of the package according to the shape features of the package.

Since the above-mentioned steps S401- S403 are the same as the above-mentioned steps S201- S203, please refer to the description of the above-mentioned steps S201- S203, which will not be repeated here.

At step S404, determining whether the regularity reaches a regularity threshold.

The regularity threshold may be set in advance according to the actual needs, and the regularity threshold may be higher when the regularity requirement of the package is higher; the regularity threshold may be lower when the regularity requirement of the package is lower.

When it is determined at step S404 that the regularity reaches the regularity threshold, in the method 400, step S405 is continued to determine that classification result of the package is a first category. When it is determined at step S404 that the regularity is lower than the regularity threshold, step S406 is continued in the method 400 to determine that classification result of the package is a second category.

The first category is a type that meets the regularity requirement, and the second category is a type that does not meet the regularity requirement. When the regularity of the package reaches the regularity threshold, it means that the regularity of the package is high and meets the requirement for the regularity of the package, so the category of the package may be determined as the first category. When the regularity of the package does not reach the regularity threshold, it means that the regularity of the package is low and does not meet the requirement for the regularity of the package, so the category of the package may be determined as the second category.

After step S406 is executed, step S407 may be continued. At step S407, sending the classification result of the package to a sorting device. In this way, the sorting device may sort the packages according to the sorting result. For example, the sorting device may sort packages belonging to the second category on the conveyor belt to the target location. In this way, the staff may sort out a package of the second category, so that the packages may meet the regularity requirement after sorting, thus improving the transportation convenience of the package. If the category of the package is the first category, it means that the regularity of the package is high, which meets the requirement for the regularity of the package, so it may be processed in the next step. For example, the package may be loaded, put into storage, or enter the next sorting process, etc., without the need for staff to sort it out.

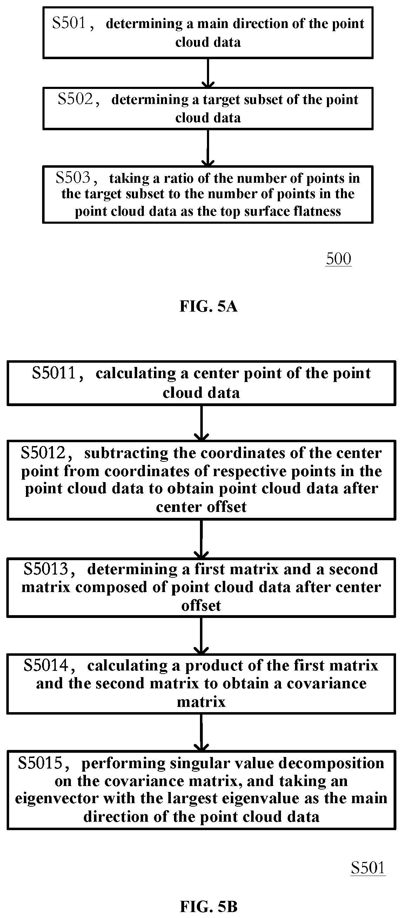

In some embodiments, step S301 may be implemented as the method 500. That is, the above step S301 may include the following steps:
As shown in FIG. 5A, at step S501, determining a main direction of the point cloud data. The main direction is used to reflect the overall orientation of the point cloud data.

In some embodiments, step S501 may be implemented as the flowchart shown in FIG. 5B. That is, step S501 may include the following steps:
As shown in FIG. 5B, at step S5011, calculating a center point of the point cloud data. The coordinates of the center point are mean values of coordinates of points in the point cloud data.

At step S5012, subtracting the coordinates of the center point from coordinates of respective points in the point cloud data to obtain point cloud data after center offset.

At step S5013, determining a first matrix and a second matrix composed of point cloud data after center offset, wherein the second matrix is a transposed matrix of the first matrix.

At step S5014, calculating a product of the first matrix and the second matrix to obtain a covariance matrix. For example, the first matrix is assumed to be A, and the second matrix is A^{T}. Covariance matrix cov = AA^{T}.

At step S5015, performing singular value decomposition (SVD) on the covariance matrix to obtain eigenvectors of the covariance matrix, and then taking an eigenvector with the largest eigenvalue as the main direction of the point cloud data.

At step S502, determining a target subset of the point cloud data.

An included angle between a normal direction of each point in the target subset and the main direction is smaller than an included angle threshold. Here, the included angle threshold is, for example, 10 degrees, 15 degrees, 18 degrees, etc., but it is not limited to this. After determining the main direction of the point cloud data, the computing device may calculate the included angle between the normal direction of each point in the point cloud data and the main direction, and then determine a set of points whose included angle is less than the included angle threshold as the target subset of the point cloud data. The normal of each point is a straight line passing through this point and perpendicular to a local plane where this point is located.

At step S503, taking a ratio of the number of points in the target subset to the number of points in the point cloud data is as the top surface flatness.

Here, the higher the top surface flatness, the smoother the top surface of the package. Specifically, the more the number of points in the target subset, the more the number of points whose included angle between the corresponding normal direction and the main direction is less than the included angle threshold, which means that the number of points at the top of the package in a plane is more, so it can be determined that the top surface of the package is smoother.

In some embodiments, step S301 may be implemented as the method 600. That is, the above step S301 may include the following steps.

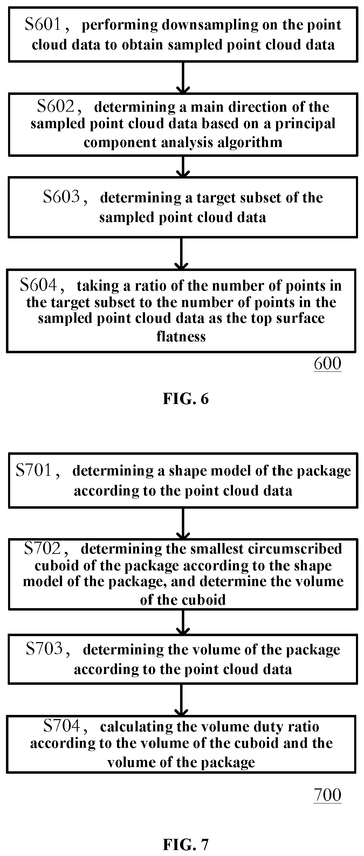

As shown in FIG. 6, at step S601, perform downsampling on the point cloud data to obtain sampled point cloud data. Here, by performing downsampling, the data scale of point cloud data may be reduced, thus improving the efficiency of calculating the top surface flatness.

At step S602, determining a main direction of the sampled point cloud data based on a principal component analysis algorithm. The main direction is used to reflect the overall orientation of the point cloud data. The principal component analysis algorithm may be the singular value decomposition algorithm mentioned above, which will not be repeated here.

At step S603, determining a target subset of the sampled point cloud data.

The included angle between the normal direction of each point in the target subset and the main direction is less than the included angle threshold. Here, the included angle threshold is, for example, 10 degrees, but it is not limited to this. Since step S603 is the same as step S502 above, please refer to the partial explanation of step S502 above, which will not be repeated here.

At step S604, taking a ratio of the number of points in the target subset to the number of points in the sampled point cloud data as the top surface flatness.

For example, the top surface flatness may be obtained according to the following formula. $flat _ ratio = \frac{{N}_{angle}}{{N}_{sampled}}$

Where, *flat_ratio* is the top surface flatness, *N_{angle}* is the number of points in the target subset, and *N_{sampled}* is the number of points in the sampled point cloud data.

In some embodiments, step S302 may be implemented as the method 700. That is, step S302 may include the following steps.

As shown in FIG. 7, at step S701, determining a shape model of the package according to the point cloud data. In other words, step S701 may determine a three-dimensional model of the package according to the point cloud data. Since the point cloud data may represent the positions of various points outside the package, the three-dimensional model of the package may be constructed from the point cloud data.

At step S702, determining the smallest circumscribed cuboid of the package according to the shape model of the package, and determining a volume of the cuboid.

After the shape model of the package is determined, the smallest circumscribed cuboid of the package may be determined based on the shape model, and then the volume of the smallest circumscribed cuboid may be calculated.

At step S703, determining the volume of the package according to the point cloud data. Here, based on the point cloud data, step S703 may adopt various volume calculation methods to determine the volume of the package.

In some embodiments, step S703 may be implemented as the method 800. That is, step S703 may include the following steps.

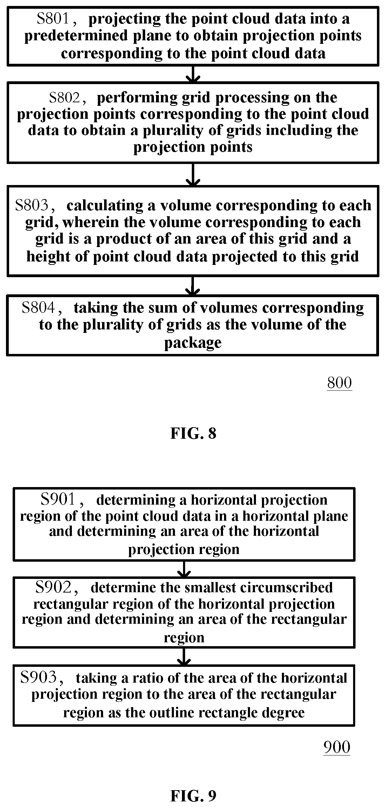

As shown in FIG. 8, at step S801, projecting the point cloud data into a predetermined plane to obtain projection points corresponding to the point cloud data. The predetermined plane may be the bearing surface of the package, for example, when the package is placed on the conveyor belt, and the predetermined plane may be the surface of the conveyor belt because the lower surface of the package coincides with the surface of the conveyor belt.

At step S802, performing grid processing on the projection points corresponding to the point cloud data to obtain a plurality of grids including the projection points.

At step S803, calculating a volume corresponding to each grid, wherein the volume corresponding to each grid is a product of an area of this grid and a height of point cloud data projected to this grid;
The height of the point cloud data projected to this grid is an average height of the point cloud data projected to this grid or a height value corresponding to the maximum number of points within the height range of the point cloud data projected to this grid. Here, the height value corresponding to the maximum number of points can also be understood as a height value corresponding to a group with the maximum number of points after grouping the point cloud data projected on the grid according to the height. The height of a single point in the point cloud data is a difference between the coordinate value of this point in the vertical direction in the three-dimensional coordinate system and the coordinate value of the conveyor belt in the vertical direction. Here, the volume corresponding to each grid can be understood as a volume of the cylinder corresponding to that grid. The cylinder can be considered as a cylinder obtained by vertically cutting the shape model of the package by the grid.

At step S804, taking the sum of volumes corresponding to the plurality of grids as the volume of the package.

At step S804, taking the sum of the volumes corresponding to plurality of grids as the volume of the package means taking the sum of the volumes corresponding to all the grids as the volume of the package.

To sum up, the method 800 may calculate the integral volume of the package by performing grid processing on the point cloud data. Therefore, even if the surface of the package is not flat enough, the method 800 may accurately determine the volume of the package.

At step S704, calculating the volume duty ratio according to the volume of the cuboid and the volume of the package. For example, step S704 may calculate the volume duty ratio according to the following formula. $vol _ ratio = \frac{{vol}_{integral}}{{vol}_{box}}$ Where, *vol_{integral}* is the volume of the package, and *vol_{box}* is the volume of the smallest circumscribed cuboid of the package.

In some embodiments, step S304 may be implemented as the method 900. That is, the above step S304 may include the following steps.

As shown in FIG. 9, at step S901, determining a horizontal projection region of the point cloud data in a horizontal plane and determining an area of the horizontal projection region.

At step S902, determining the smallest circumscribed rectangular region of the horizontal projection region and determining an area of the rectangular region;
At step S903, taking a ratio of the area of the horizontal projection region to the area of the rectangular region as the outline rectangle degree. For example, step S903 may calculate the outline rectangle degree according to the following formula. $rectangularity = \frac{{S}_{convex _ hull}}{{S}_{min _ rect}}$

Where, *rectangularity* is the outline rectangle degree, *S_{convex_hull}* is the area of horizontal projection region, and *S_{min_rect}* is the area of the smallest circumscribed rectangular region. The closer the outline rectangle degree is to 1, the closer the top surface of the package is to the rectangle, and the better the package regularity.

In the above embodiments, the regularity of the package is related to the top surface flatness, the volume duty ratio, the ideal volume ratio, and the outline rectangle degree, wherein the higher the top surface flatness, the higher the smoothness of the package surface, and the higher the regularity of the package. The higher the volume duty ratio and ideal volume duty ratio, the less the residual capacity of the package, and the higher the regularity of the package. The higher the outline rectangle degree, the closer the outline of the package is to the rectangle, and the higher the regularity of the package. That is to say, the regularity of the package is positively correlated with the top surface flatness, the volume duty ratio and the ideal volume ratio and the outline rectangle degree.

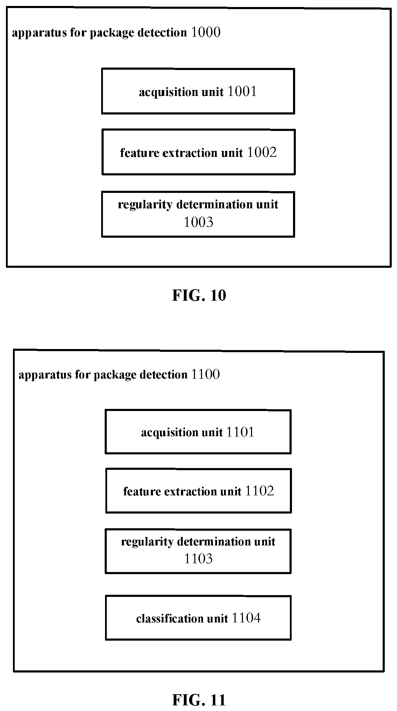

FIG. 10 shows an apparatus 1000 for package detection according to some embodiments of the present application. The apparatus 1000 may be deployed in the computing device 130, for example.

As shown in FIG. 10, the apparatus 1000 includes an acquisition unit 1001, a feature extraction unit 1002 and a regularity determination unit 1003.

The acquisition unit 1001 is configured for acquiring point cloud data of an outer surface of the package,
The feature extraction unit 1002 is configured for determining shape features of the package according to the point cloud data;
The regularity determination unit 1003 is configured for determining regularity of the package according to the shape features of the package, wherein the regularity indicates a surface flatness of the package and/or a proximity of a loaded capacity of the package to an upper limit of capacity of the package. The more specific implementation manner of the apparatus 1000 is the same as that of the method 200, and details are not repeated here.

To sum up, according to the apparatus 1000 for package detection of the present application, the shape features of the package can be acquired based on the point cloud data of the package, and the regularity can be determined according to the shape features. The apparatus 1000 can avoid the trouble of manually detecting the regularity of the package, realize automatic detection of the regularity of the package by device, thereby improving the efficiency of the regularity detection of the package and the consistency of the detection results.

FIG. 11 shows an apparatus 1100 for package detection according to some embodiments of the present application. The apparatus 1100 may be deployed in the computing device 130, for example.

As shown in FIG. 11, the apparatus 1100 includes an acquisition unit 1101, a feature extraction unit 1102, a regularity determination unit 1103 and a classification unit 1104.

The acquisition unit 1101 may be configured for acquiring point cloud data of an outer surface of the package,
The feature extraction unit 1102 may be configured for determining shape features of the package according to the point cloud data;
The regularity determination unit 1103 may be configured for determining regularity of the package according to the shape features of the package.

The classification unit 1104 may be configured for determining whether the regularity reaches a regularity threshold, and when the regularity reaches the regularity threshold, the classification unit 1104 determines that the classification result of the package is a first category. When the regularity is lower than the regularity threshold, the classification unit 1104 determines that the classification result of the package is a second category.

In some embodiments, in order to acquire point cloud data, the acquisition unit 1101 may receive a scanning result obtained by scanning a package on the conveyor belt by the data acquisition device. According to the scanning result, the acquisition unit 1101 determines the point cloud data.

According to the point cloud data, the feature extraction unit 1102 may determine one or more shape features of the package. For example, according to the point cloud data, the feature extraction unit 1102 determines the top surface flatness of the package. The top surface flatness is used to characterize the smoothness of the top surface of the package. According to the point cloud data, the feature extraction unit 1102 determines the volume duty ratio of the package. The volume duty ratio is a ratio of a volume of the package to a volume of the smallest circumscribed cuboid of the package. According to the point cloud data, the feature extraction unit 1102 determines the ideal volume ratio of the package. The ideal volume ratio is a ratio of the volume of the package to the upper limit of capacity of the package. According to the point cloud data, the outline rectangle degree of the package is determined. The outline rectangle degree is a ratio of an area of the horizontal projection region of the package to an area of the smallest circumscribed rectangular region of the horizontal projection region.

In some embodiments, the regularity determination unit 1103 may be configured for calculating a weighted sum of at least one shape feature among the top surface flatness, the volume duty ratio, the ideal volume ratio and the outline rectangle degree, and taking the weighted sum as the regularity of the package.

The feature extraction unit 1102 may be configured for determining a main direction of the point cloud data. The main direction is used for reflecting an overall orientation of the point cloud data. The feature extraction unit 1102 may be configured for determining a target subset of the point cloud data. An included angle between a normal direction of each point in the target subset and the main direction is smaller than an included angle threshold. In this way, the feature extraction unit 1102 may take a ratio of the number of points in the target subset to the number of points in the point cloud data is as the top surface flatness.

Before determining the main direction of the point cloud data, the feature extraction unit 1102 may also be configured for performing downsampling on the point cloud data to obtain sampled point cloud data.

In some embodiments, the feature extraction unit 1102 may be configured for determining a shape model of the package according to the point cloud data. The feature extraction unit 1102 may be configured for determining the smallest circumscribed cuboid of the package according to the shape model of the package, and determining the volume of the cuboid. The feature extraction unit 1102 may be configured for determining the volume of the package according to the point cloud data. The feature extraction unit 1102 may be configured for calculating the volume duty ratio according to the volume of the cuboid and the volume of the package.

To determine the volume of the package, the feature extraction unit 1102 may be configured for performing grid processing on the point cloud data according to a grid array in a predetermined plane to obtain points corresponding to a plurality of grids, wherein the horizontal projection of the points corresponding to each of the grids belongs to the range of the grid. According to the points corresponding to each of the grids, the feature extraction unit 1102 calculates the volume corresponding to this grid. The volume corresponding to the grid is a product of an area of the grid and a height of the point corresponding to the grid. The feature extraction unit 1102 takes the sum of volumes corresponding to the plurality of grids as the volume of the package.

To determine the outline rectangle degree of the package, the feature extraction unit 1102 may be configured for determining a horizontal projection region of the point cloud data in a horizontal plane and determining an area of the horizontal projection region. The feature extraction unit 1102 may be configured for determining the smallest circumscribed rectangular region of the horizontal projection region and determining an area of the rectangular region. The feature extraction unit 1102 may be configured for taking a ratio of the area of the horizontal projection region to the area of the rectangular region as the outline rectangle degree.

To determine the main direction of the point cloud data, the feature extraction unit 1102 may be configured for calculating a center point of the point cloud data. Coordinates of the center point are mean values of coordinates of the points in the point cloud data. The feature extraction unit 1102 subtracts the coordinates of the center point from coordinates of respective points in the point cloud data to obtain point cloud data after center offset. The feature extraction unit 1102 determines a first matrix and a second matrix composed of point cloud data after center offset, wherein the second matrix is a transposed matrix of the first matrix. The feature extraction unit 1102 obtains a covariance matrix by calculating a product of the first matrix and the second matrix. The feature extraction unit 1102 performs singular value decomposition on the covariance matrix, and takes an eigenvector with the largest eigenvalue as the main direction of the point cloud data.

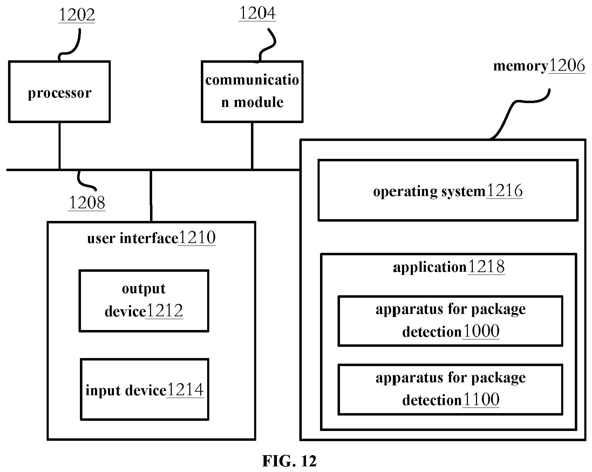

FIG. 12 shows a schematic diagram of a computing device according to some embodiments of the present application. As shown in FIG. 12, the computing device includes one or more processor (Central Processing Unit, CPU) 1202, a communication module 1204, a memory 1206, a user interface 1210, and a communication bus 1208 for interconnecting these components. Among them, only one processor is shown as a schematic in FIG. 12.

The processor 1202 may receive and send data through the communication module 1204 to realize network communication and/or local communication.

The user interface 1210 includes one or more output devices 1212 including one or more speakers and/or one or more visual displays. The user interface 1210 also includes one or more input devices 1214. The user interface 1210 may receive instructions from a remote controller, for example, but is not limited to this. In FIG. 12, only one output device and one input device are shown for illustration.

The memory 1206 may be a high-speed random access memory, such as DRAM, SRAM, DDR RAM, or other random access solid-state memory devices; or non-volatile memory, such as one or more magnetic disk storage devices, optical disk storage devices, flash memory devices, or other non-volatile solid-state storage devices.

The memory 1206 stores a set of instructions executable by the processor 1202, including:
an operating system 1216, including programs for handling various basic system services and for performing hardware-related tasks;
an application 1218, including for implementing the various programs described above for package detection, may include, for example, apparatuses 1000 and 1100 for package detection. Such a program can implement the processing flow in each of the above-mentioned examples, and may include, for example, a method for package detection. In one embodiment, the application 1218 may include various programs for implementing the above-described package detection, for example, may include the apparatus1000 for package detection or the apparatus1100 for package detection.

In addition, each embodiment of the present application may be realized by a data processing program executed by a data processing device such as a computer. Obviously, the data processing program constitutes the present invention. In addition, the data processing program usually stored in a storage medium is executed by directly reading the program out of the storage medium or by installing or copying the program into the storage device (such as hard disk and/or memory) of the data processing device. Therefore, such a storage medium also constitutes the present invention. The storage medium may use any type of recording manner, such as paper storage medium (such as paper tape, etc.), magnetic storage medium (such as floppy disk, hard disk, flash memory, etc.), optical storage medium (such as CD-ROM, etc.), magneto-optical storage medium (such as MO, etc.), etc.

Therefore, the present application further discloses a non-transitory storage medium storing a program, the program includes instructions that, when executed by a processor, cause the computing device to perform the method of package detection according to the present application.

The present application further discloses a computer program product including instructions, which, when run in a computer, causes the computer to execute the method for package detection described in any of the above embodiments.

According to the package detection scheme of the present application, when the computer program product runs in the computer, the computer may obtain the shape features of the package based on the point cloud data of the package, and determine the regularity according to the shape features. The package detection scheme can avoid the trouble of manually detecting the regularity of the package, realize automatic detection of the regularity of the package by device, thereby improving the efficiency of the regularity detection of the package and the consistency of the detection results.

In addition, the method steps described in the present application can be implemented not only by data processing programs, but also by hardware, such as logic gates, switches, application specific integrated circuits (ASIC), programmable logic controllers and embedded microcontrollers. Therefore, the hardware that can realize the method described in the present application can also constitute the present application.

## Claims

1. A method for package detection, comprising:
acquiring point cloud data of an outer surface of a package (S201);
determining shape features of the package according to the point cloud data (S202);
determining regularity of the package according to the shape features of the package (S203), wherein the regularity indicates a surface flatness of the package and/or a proximity of a loaded capacity of the package to an upper limit of capacity of the package;
wherein determining the shape features of the package according to the point cloud data (S202) comprises more than one of the following steps:
determining a top surface flatness of the package according to the point cloud data (S301), wherein the top surface flatness is used to characterize a smoothness of a top surface of the package;
determining a volume duty ratio of the package according to the point cloud data (S302), wherein the volume duty ratio is a ratio of a volume of the package to a volume of a smallest circumscribed cuboid of the package;
determining an ideal volume ratio of the package according to the point cloud data (S303), wherein the ideal volume ratio is a ratio of the volume of the package to the upper limit of capacity of the package;
determining an outline rectangle degree of the package according to the point cloud data (S304), wherein the outline rectangle degree is a ratio of an area of an horizontal projection region of the package to an area of a smallest circumscribed rectangular region of the horizontal projection region;
wherein determining the regularity of the package according to the shape features of the package (S203) comprises:
calculating a weighted sum of more than one shape feature among the top surface flatness, the volume duty ratio, the ideal volume ratio and the outline rectangle degree, and taking the weighted sum as the regularity of the package.

2. The method according to claim 1, wherein the acquiring point cloud data of the outer surface of the package (S201) comprises:
receiving a scanning result obtained by scanning the package on a conveyor belt by a point cloud data acquisition device;
determining the point cloud data according to the scanning result.

3. The method according to claim 1, wherein the determining the top surface flatness of the package according to the point cloud data (S301) comprises:
determining a main direction of the point cloud data (S501), wherein the main direction is used for reflecting an overall orientation of the point cloud data;
determining a target subset of the point cloud data (S502), wherein an included angle between a normal direction of each point in the target subset and the main direction is smaller than an included angle threshold;
taking a ratio of the number of points in the target subset to the number of points in the point cloud data as the top surface flatness (S503).

4. The method according to claim 1, wherein determining the top surface flatness of the package according to the point cloud data (S301) comprises: performing downsampling on the point cloud data to obtain sampled point cloud data (S601);
determining a main direction of the sampled point cloud data based on a principal component analysis algorithm (S602), wherein the main direction is used for reflecting an overall orientation of the point cloud data;
determining a target subset of the sampled point cloud data (S603), wherein an included angle between a normal direction of each point in the target subset and the main direction is smaller than an included angle threshold;
taking a ratio of the number of points in the target subset to the number of points in the sampled point cloud data as the top surface flatness (S604).

5. The method according to claim 1, wherein the determining the volume duty ratio of the package according to the point cloud data (S302) comprises:
determining a shape model of the package according to the point cloud data (S701);
determining the smallest circumscribed cuboid of the package according to the shape model of the package, and determining a volume of the cuboid (S702);
determining the volume of the package according to the point cloud data (S703);
calculating the volume duty ratio according to the volume of the cuboid and the volume of the package (S704).

6. The method according to claim 5, wherein the determining the volume of the package according to the point cloud data (S703) comprises:
projecting the point cloud data into a predetermined plane to obtain projection points corresponding to the point cloud data (S801);
performing grid processing on the projection points corresponding to the point cloud data to obtain a plurality of grids including the projection points (S802);
calculating a volume corresponding to each grid, wherein the volume corresponding to each grid is a product of an area of this grid and a height of point cloud data projected to this grid (S803);
taking a sum of volumes corresponding to the plurality of grids as the volume of the package (S804).

7. The method according to claim 1, wherein the determining the outline rectangle degree of the package according to the point cloud data (S304) comprises:
determining a horizontal projection region of the point cloud data in a horizontal plane and determining an area of the horizontal projection region (S901);
determining the smallest circumscribed rectangular region of the horizontal projection region and determining an area of the smallest circumscribed rectangular region (S902);
taking a ratio of the area of the horizontal projection region to the area of the smallest circumscribed rectangular region as the outline rectangle degree (S903).

8. The method according to claim 3, wherein the determining the main direction of the point cloud data (S501) comprises:
calculating a center point of the point cloud data (S5011), wherein coordinates of the center point are mean values of coordinates of points in the point cloud data;
subtracting the coordinates of the center point from coordinates of respective points in the point cloud data to obtain point cloud data after center offset (S5012);
determining a first matrix and a second matrix composed of the point cloud data after center offset (S5013), wherein the second matrix is a transposed matrix of the first matrix;
calculating a product of the first matrix and the second matrix to obtain a covariance matrix (S5014);
performing singular value decomposition on the covariance matrix, and taking an eigenvector with a largest eigenvalue as the main direction of the point cloud data (S5015).

9. An apparatus (1000) for package detection, comprising:
an acquisition unit (1001), configured for acquiring point cloud data of an outer surface of a package,
a feature extraction unit (1002), configured for determining shape features of the package according to the point cloud data;
a regularity determination unit (1003), configured for determining regularity of the package according to the shape features of the package, wherein the regularity indicates a surface flatness of the package and a proximity of a loaded capacity of the package to an upper limit of capacity of the package;
wherein determining the shape features of the package according to the point cloud data comprises more than one of the following steps:
determining a top surface flatness of the package according to the point cloud data, wherein the top surface flatness is used to characterize a smoothness of a top surface of the package;
determining a volume duty ratio of the package according to the point cloud data, wherein the volume duty ratio is a ratio of a volume of the package to a volume of a smallest circumscribed cuboid of the package;
determining an ideal volume ratio of the package according to the point cloud data, wherein the ideal volume ratio is a ratio of the volume of the package to the upper limit of capacity of the package;
determining an outline rectangle degree of the package according to the point cloud data, wherein the outline rectangle degree is a ratio of an area of an horizontal projection region of the package to an area of a smallest circumscribed rectangular region of the horizontal projection region;
wherein determining the regularity of the package according to the shape features of the package comprises:
calculating a weighted sum of more than one shape feature among the top surface flatness, the volume duty ratio, the ideal volume ratio and the outline rectangle degree, and taking the weighted sum as the regularity of the package.

10. A computing device (130), comprising:
a memory (1206);
a processor (1202);
a program stored in the memory (1206) and configured to be executed by the processor (1202), the program comprising instructions for executing the method of any one of claims 1-8.

11. A storage medium storing a program, which comprising instructions that, when executed by a computing device (130), cause the computing device (130) to perform the method of any one of claims 1-8.

12. A logistics system, comprising:
the computing device (130) of claim 10;
a conveyor belt (110);
a point cloud data acquisition device (120), configured for acquiring point cloud data of a package on the conveyor belt (110).

13. A computer program product comprising instructions, which, when run in a computer, causes the computer to execute the method of any one of claims 1-8.

## Patentansprüche

1. Verfahren zur Erkennung von Verpackungen, umfassend:
Erfassen von Punktwolkendaten einer Außenfläche einer Verpackung (S201);
Ermitteln von Formmerkmalen der Verpackung anhand der Punktwolkendaten (S202);
Ermitteln einer Regelmäßigkeit der Verpackung anhand der Formmerkmale der Verpackung (S203), wobei die Regelmäßigkeit eine Oberflächenebenheit der Verpackung und/oder eine Nähe einer Beladungskapazität der Verpackung an eine Obergrenze der Kapazität der Verpackung angibt;
wobei das Ermitteln der Formmerkmale der Verpackung anhand der Punktwolkendaten (S202) mehr als einen der folgenden Schritte umfasst:
Ermitteln einer Oberflächenebenheit einer Oberseite der Verpackung anhand der Punktwolkendaten (S301), wobei die Oberflächenebenheit der Oberseite dazu dient, eine Glätte einer Oberseite der Verpackung zu charakterisieren;
Ermitteln eines Volumenausnutzungsgrades der Verpackung anhand der Punktwolkendaten (S302), wobei der Volumenausnutzungsgrad ein Verhältnis des Volumens der Verpackung zu einem Volumen eines kleinsten umschriebenen Quaders der Verpackung ist;
Ermitteln eines idealen Volumenverhältnisses der Verpackung anhand der Punktwolkendaten (S303), wobei das ideale Volumenverhältnis ein Verhältnis des Volumens der Verpackung zur Obergrenze der Kapazität der Verpackung ist;
Ermitteln eines Rechteckigkeitsgrades der Verpackung anhand der Punktwolkendaten (S304), wobei der Rechteckigkeitsgrad ein Verhältnis einer Fläche eines horizontalen Projektionsbereichs der Verpackung zu einer Fläche eines kleinsten umschriebenen rechteckigen Bereichs des horizontalen Projektionsbereichs ist;
wobei das Ermitteln der Regelmäßigkeit der Verpackung anhand der Formmerkmale der Verpackung (S203) Folgendes umfasst:
Berechnen einer gewichteten Summe aus mehr als einem Formmerkmal, darunter die Oberflächenebenheit der Oberseite, der Volumenausnutzungsgrad, das ideale Volumenverhältnis und der Rechteckigkeitsgrad, und Festlegen der gewichteten Summe als Regelmäßigkeit der Verpackung.

2. Verfahren nach Anspruch 1, wobei das Erfassen von Punktwolkendaten der Außenfläche der Verpackung (S201) umfasst:
Empfangen eines Scanergebnisses, das durch Scannen der Verpackung auf einem Förderband mittels einer Punktwolken-Erfassungsvorrichtung erhalten wurde;
Ermitteln der Punktwolkendaten anhand des Scanergebnisses.

3. Verfahren nach Anspruch 1, wobei das Ermitteln der Oberflächenebenheit der Oberseite der Verpackung anhand der Punktwolkendaten (S301) umfasst:
Ermitteln einer Hauptrichtung der Punktwolkendaten (S501), wobei die Hauptrichtung dazu dient, eine allgemeine Ausrichtung der Punktwolkendaten widerzuspiegeln;
Ermitteln einer Zielteilmenge der Punktwolkendaten (S502), wobei ein eingeschlossener Winkel zwischen einer Normalenrichtung jedes Punktes in der Zielteilmenge und der Hauptrichtung kleiner ist als ein eingeschlossener Winkel-Schwellenwert;
Festlegen eines Verhältnisses der Anzahl an Punkten in der Zielteilmenge zu der Anzahl an Punkten in den Punktwolkendaten als die Oberflächenebenheit der Oberseite (S503).

4. Verfahren nach Anspruch 1, wobei das Ermitteln der Oberflächenebenheit der Oberseite der Verpackung anhand der Punktwolkendaten (S301) Folgendes umfasst: Durchführen von Unterabtasten der Punktwolkendaten, um abgetastete Punktwolkendaten zu erhalten (S601);
Ermitteln einer Hauptrichtung der abgetasteten Punktwolkendaten auf der Grundlage eines Algorithmus zur Hauptkomponentenanalyse (S602), wobei die Hauptrichtung dazu dient, eine allgemeine Ausrichtung der Punktwolkendaten widerzuspiegeln;
Ermitteln einer Zielteilmenge der abgetasteten Punktwolkendaten (S603), wobei ein eingeschlossener Winkel zwischen einer Normalenrichtung jedes Punktes in der Zielteilmenge und der Hauptrichtung kleiner ist als ein eingeschlossener Winkel-Schwellenwert;
Festlegen eines Verhältnisses der Anzahl an Punkten in der Zielteilmenge zu der Anzahl an Punkten in den abgetasteten Punktwolkendaten als die Oberflächenebenheit der Oberseite (S604).

5. Verfahren nach Anspruch 1, wobei das Ermitteln des Volumenausnutzungsgrades der Verpackung anhand der Punktwolkendaten (S302) umfasst:
Ermitteln eines Formmodells der Verpackung anhand der Punktwolkendaten (S701);
Ermitteln des kleinsten umschriebenen Quaders der Verpackung anhand des Formmodells der Verpackung und Ermitteln eines Volumens des Quaders (S702);
Ermitteln des Volumens der Verpackung anhand der Punktwolkendaten (S703);
Berechnen des Volumenausnutzungsgrades anhand des Volumens des Quaders und des Volumens der Verpackung (S704).

6. Verfahren nach Anspruch 5, wobei das Ermitteln des Volumens der Verpackung anhand der Punktwolkendaten (S703) umfasst:
Projizieren der Punktwolkendaten auf eine vorbestimmte Ebene, um den Punktwolkendaten entsprechende Projektionspunkte zu erhalten (S801);
Durchführen einer Rasterverarbeitung an den den Punktwolkendaten entsprechenden Projektionspunkten, um eine Vielzahl von Rastern zu erhalten, die die Projektionspunkte enthalten (S802);
Berechnen eines jedem Gitter entsprechenden Volumens, wobei das jedem Gitter entsprechende Volumen ein Produkt aus einer Fläche dieses Gitters und einer Höhe von auf dieses Gitter projizierten Punktwolkendaten ist (S803);
Festlegen einer Summe aus den mehreren Gittern entsprechenden Volumina als das Volumen der Verpackung (S804).

7. Verfahren nach Anspruch 1, wobei das Ermitteln des Rechteckigkeitsgrades der Verpackung anhand der Punktwolkendaten (S304) umfasst:
Ermitteln eines horizontalen Projektionsbereichs der Punktwolkendaten in einer horizontalen Ebene und Ermitteln einer Fläche des horizontalen Projektionsbereichs (S901);
Ermitteln des kleinsten umschriebenen rechteckigen Bereichs des horizontalen Projektionsbereichs und Ermitteln einer Fläche des kleinsten umschriebenen rechteckigen Bereichs (S902);
Festlegen eines Verhältnisses der Fläche des horizontalen Projektionsbereichs zu der Fläche des kleinsten umschriebenen rechteckigen Bereichs als Rechteckigkeitsgrad (S903).

8. Verfahren nach Anspruch 3, wobei das Ermitteln der Hauptrichtung der Punktwolkendaten (S501) umfasst:
Berechnen eines Mittelpunktes der Punktwolkendaten (S5011), wobei Koordinaten des Mittelpunktes Mittelwerte aus Koordinaten von Punkten in den Punktwolkendaten sind;
Subtrahieren der Koordinaten des Mittelpunkts von Koordinaten jeweiliger Punkte in den Punktwolkendaten, um Punktwolkendaten nach Mittelpunktsverschiebung zu erhalten (S5012);
Ermitteln einer ersten Matrix und einer zweiten Matrix, die aus den Punktwolkendaten nach Mittelpunktsverschiebung bestehen (S5013), wobei die zweite Matrix eine transponierte Matrix der ersten Matrix ist;
Berechnen eines Produkts aus der ersten Matrix und der zweiten Matrix, um eine Kovarianzmatrix zu erhalten (S5014);
Durchführen einer Singulärwertzerlegung der Kovarianzmatrix und Festlegen eines Eigenvektors mit dem größten Eigenwert als Hauptrichtung der Punktwolkendaten (S5015).

9. Vorrichtung (1000) zur Erkennung von Verpackungen, umfassend:
eine Erfassungseinheit (1001), die dazu ausgelegt ist, Punktwolkendaten einer Außenfläche einer Verpackung zu erfassen,
eine Merkmalsextraktionseinheit (1002), die dazu ausgelegt ist, Formmerkmale der Verpackung anhand der Punktwolkendaten zu ermitteln;
eine Regelmäßigkeitsermittelungseinheit (1003), die dazu ausgelegt ist, die Regelmäßigkeit der Verpackung anhand der Formmerkmale der Verpackung zu ermitteln, wobei die Regelmäßigkeit eine Oberflächenebenheit der Verpackung und eine Nähe einer Beladungskapazität der Verpackung an eine Obergrenze der Kapazität der Verpackung angibt;
wobei das Ermitteln der Formmerkmale der Verpackung anhand der Punktwolkendaten mehr als einen der folgenden Schritte umfasst:
Ermitteln einer Oberflächenebenheit einer Oberseite der Verpackung anhand der Punktwolkendaten, wobei die Oberflächenebenheit der Oberseite dazu dient, eine Glätte einer Oberseite der Verpackung zu charakterisieren;
Ermitteln eines Volumenausnutzungsgrades der Verpackung anhand der Punktwolkendaten, wobei der Volumenausnutzungsgrad ein Verhältnis eines Volumens der Verpackung zu einem Volumen eines kleinsten umschriebenen Quaders der Verpackung ist;
Ermitteln eines idealen Volumenverhältnisses der Verpackung anhand der Punktwolkendaten, wobei das ideale Volumenverhältnis ein Verhältnis des Volumens der Verpackung zur Obergrenze der Kapazität der Verpackung ist;
Ermitteln eines Rechteckigkeitsgrades der Verpackung anhand der Punktwolkendaten, wobei der Rechteckigkeitsgrad ein Verhältnis einer Fläche eines horizontalen Projektionsbereichs der Verpackung zu einer Fläche eines kleinsten umschriebenen rechteckigen Bereichs des horizontalen Projektionsbereichs ist;
wobei das Ermitteln der Regelmäßigkeit der Verpackung anhand der Formmerkmale der Verpackung Folgendes umfasst:
Berechnen einer gewichteten Summe aus mehr als einem Formmerkmal, die Oberflächenebenheit der Oberseite, der Volumenausnutzungsgrad, das ideale Volumenverhältnis und der Rechteckigkeitsgrad, und Festlegen der gewichteten Summe als Regelmäßigkeit der Verpackung.

10. Eine Rechenvorrichtung (130), umfassend:
einen Speicher (1206);
einen Prozessor (1202);
ein in dem Speicher (1206) gespeichertes Programm, das so konfiguriert ist, dass es vom Prozessor (1202) ausgeführt wird, wobei das Programm Anweisungen zur Ausführung des Verfahrens nach einem der Ansprüche 1 bis 8 umfasst.

11. Ein Speichermedium, auf dem ein Programm gespeichert ist, das Anweisungen umfasst, die, wenn sie von einer Rechenvorrichtung (130) ausgeführt werden, bewirken, dass die Rechenvorrichtung (130) das Verfahren nach einem der Ansprüche 1 bis 8 durchführt.

12. Ein Logistiksystem, umfassend:
die Rechenvorrichtung (130) nach Anspruch 10;
ein Förderband (110);
eine Punktwolkendaten-Erfassungsvorrichtung (120), die dazu ausgelegt ist, Punktwolkendaten einer Verpackung auf dem Förderband (110) zu erfassen.

13. Ein Computerprogrammprodukt, das Anweisungen umfasst, die, wenn sie auf einem Computer ausgeführt werden, den Computer veranlassen, das Verfahren nach einem der Ansprüche 1 bis 8 auszuführen.

## Revendications

1. Procédé de détection d'un colis, comprenant :
l'acquisition de données de nuage de points d'une surface extérieure d'un colis (S201) ;
la détermination des caractéristiques de forme du colis en fonction des données de nuage de points (S202) ;
la détermination de la régularité du colis en fonction des caractéristiques de forme du colis (S203), la régularité indiquant la planéité d'une surface du colis et/ou la proximité de la capacité de chargement du colis par rapport à une limite supérieure de la capacité du colis ;
la détermination des caractéristiques de forme du colis en fonction des données de nuage de points (S202) comprenant au moins l'une des étapes suivantes :
la détermination de la planéité de la surface supérieure du colis en fonction des données de nuage de points (S301), la planéité de la surface supérieure étant utilisée pour caractériser la régularité de la surface supérieure du colis ;
la détermination d'un rapport de remplissage volumique du colis en fonction des données de nuage de points (S302), le rapport de remplissage volumique étant un rapport entre un volume du colis et un volume d'un plus petit parallélépipède rectangle circonscrit au colis ;
la détermination d'un rapport volumique idéal du colis à partir des données de nuage de points (S303), le rapport volumique idéal étant un rapport entre le volume du colis et la limite supérieure de la capacité du colis ;
la détermination d'un degré de rectangularité du contour du colis à partir des données de nuage de points (S304), le degré de rectangularité du contour étant un rapport entre une aire d'une région de projection horizontale du colis et une aire de la plus petite région rectangulaire circonscrite à cette région de projection horizontale ;
la détermination de la régularité du colis en fonction de caractéristiques de forme du colis (S203) comprenant :
le calcul d'une somme pondérée de plusieurs caractéristiques de forme parmi la planéité de la surface supérieure, le rapport de remplissage volumique, le rapport volumique idéal et le degré de rectangularité du contour, et la prise en compte de cette somme pondérée comme représentant la régularité du colis.

2. Procédé selon la revendication 1, dans lequel l'acquisition des données de nuage de points de la surface extérieure du colis (S201) comprend :
la réception d'un résultat de balayage obtenu en balayant le colis sur un tapis roulant à l'aide d'un dispositif d'acquisition de données de nuage de points ;
la détermination des données de nuage de points en fonction du résultat de balayage.

3. Procédé selon la revendication 1, dans lequel la détermination de la planéité de la surface supérieure du colis en fonction des données de nuage de points (S301) comprend :
la détermination d'une direction principale des données de nuage de points (S501), ladite direction principale étant utilisée pour refléter une orientation globale des données de nuage de points ;
la détermination d'un sous-ensemble cible des données de nuage de points (S502), un angle inclus entre une direction normale de chaque point du sous-ensemble cible et la direction principale étant inférieur à un seuil d'angle inclus ;
la considération d'un rapport entre le nombre de points du sous-ensemble cible et le nombre de points des données de nuage de points comme représentant la planéité de la surface supérieure (S503).

4. Procédé selon la revendication 1, dans lequel la détermination de la planéité de la surface supérieure du colis en fonction des données de nuage de points (S301) comprend : la réalisation d'un sous-échantillonnage des données de nuage de points afin d'obtenir des données de nuage de points échantillonnées (S601) ;
la détermination d'une direction principale des données de nuage de points échantillonnées à l'aide d'un algorithme d'analyse en composantes principales (S602), la direction principale étant utilisée pour refléter l'orientation globale des données de nuage de points ;
la détermination d'un sous-ensemble cible des données de nuage de points échantillonnées (S603), l'angle inclus entre la direction normale de chaque point du sous-ensemble cible et la direction principale étant inférieur à un seuil d'angle inclus ;
la considération d'un rapport entre le nombre de points du sous-ensemble cible et le nombre de points des données de nuage de points échantillonnées comme représentant la planéité de la surface supérieure (S604).

5. Procédé selon la revendication 1, dans lequel la détermination du rapport de volume du colis à partir des données de nuage de points (S302) comprend :
la détermination d'un modèle de forme du colis à partir des données de nuage de points (S701) ;
la détermination du plus petit parallélépipède rectangle circonscrit au colis à partir du modèle de forme du colis, et la détermination d'un volume dudit parallélépipède rectangle (S702) ;
la détermination du volume du colis à partir des données de nuage de points (S703) ;
le calcul du rapport de remplissage volumique à partir du volume du parallélépipède rectangle et du volume du colis (S704).

6. Procédé selon la revendication 5, dans lequel la détermination du volume du colis à partir des données de nuage de points (S703) comprend :
la projection des données de nuage de points sur un plan prédéterminé afin d'obtenir des points de projection correspondant aux données de nuage de points (S801) ;
le traitement par maillage des points de projection correspondant aux données de nuage de points afin d'obtenir une pluralité de mailles comprenant les points de projection (S802) ;
le calcul d'un volume correspondant à chaque maille, le volume correspondant à chaque maille étant le produit de l'aire de cette maille par la hauteur des données de nuage de points projetées sur cette maille (S803) ;
la sommation des volumes correspondant à la pluralité de mailles pour obtenir le volume du colis (S804).

7. Procédé selon la revendication 1, dans lequel la détermination du degré de rectangularité de contour du colis selon les données de nuage de points (S304) comprend :
la détermination d'une région de projection horizontale des données de nuage de points dans un plan horizontal et la détermination d'une aire de la région de projection horizontale (S901) ;
la détermination de la plus petite région rectangulaire circonscrite de la région de projection horizontale et la détermination d'une aire de cette plus petite région rectangulaire circonscrite (S902) ;
la considération d'un rapport entre l'aire de la région de projection horizontale et l'aire de la plus petite région rectangulaire circonscrite comme représentant le degré de rectangularité du contour (S903).

8. Procédé selon la revendication 3, dans lequel la détermination de la direction principale des données de nuage de points (S501) comprend :
le calcul d'un point central des données de nuage de points (S5011), les coordonnées du point central étant les valeurs moyennes des coordonnées des points dans les données de nuage de points ;
la soustraction des coordonnées du point central des coordonnées des points respectifs des données de nuage de points afin d'obtenir des données de nuage de points après décalage du centre (S5012) ;
la détermination d'une première matrice et d'une deuxième matrice composées des données de nuage de points après décalage du centre (S5013), la deuxième matrice étant la matrice transposée de la première matrice ;
le calcul d'un produit de la première matrice et de la deuxième matrice pour obtenir une matrice de covariance (S5014) ;
la décomposition en valeurs singulières de la matrice de covariance, et la prise en compte d'un vecteur propre associé à la plus grande valeur propre comme représentant la direction principale des données de nuage de points (S5015).

9. Appareil (1000) de détection de colis, comprenant :
une unité d'acquisition (1001), configurée pour acquérir des données de nuage de points d'une surface extérieure d'un colis,
une unité d'extraction de caractéristiques (1002), configurée pour déterminer les caractéristiques de forme du colis en fonction des données de nuage de points ;
une unité de détermination de la régularité (1003), configurée pour déterminer la régularité du colis en fonction des caractéristiques de forme du colis, la régularité indiquant une planéité de la surface du colis et une proximité de la capacité de chargement du colis par rapport à une limite supérieure de la capacité du colis ;
dans lequel la détermination des caractéristiques de forme du colis à partir des données de nuage de points comprend au moins l'une des étapes suivantes :
la détermination d'une planéité de la surface supérieure du colis à partir des données de nuage de points, ladite planéité de la surface supérieure étant utilisée pour caractériser la régularité de la surface supérieure du colis ;
la détermination d'un rapport de remplissage volumique du colis à partir des données de nuage de points, ledit rapport de remplissage volumique étant le rapport entre le volume du colis et le volume du plus petit parallélépipède rectangle circonscrit au colis ;
la détermination d'un rapport volumique idéal du colis à partir des données de nuage de points, ce rapport volumique idéal étant le rapport entre le volume du colis et la limite supérieure de sa capacité ;
la détermination d'un degré de rectangularité du contour du colis à partir des données de nuage de points, ce degré de rectangularité étant le rapport entre une aire d'une région de projection horizontale du colis et l'aire du plus petit rectangle circonscrit à cette région de projection horizontale ;
dans lequel la détermination de la régularité du colis en fonction des caractéristiques de forme de celui-ci comprend :
le calcul d'une somme pondérée de plusieurs caractéristiques de forme parmi la planéité de la surface supérieure, le rapport de remplissage volumique, le rapport volumique idéal et le degré de rectangularité du contour, et la prise en compte de cette somme pondérée comme représentant la régularité du colis.

10. Dispositif informatique (130), comprenant :
une mémoire (1206) ;
un processeur (1202) ;
un programme stocké dans la mémoire (1206) et configuré pour être exécuté par le processeur (1202), le programme comprenant des instructions pour exécuter le procédé selon l'une quelconque des revendications 1 à 8.

11. Support de stockage stockant un programme, lequel comprend des instructions qui, lorsqu'elles sont exécutées par un dispositif informatique (130), amènent le dispositif informatique (130) à mettre en œuvre le procédé selon l'une quelconque des revendications 1 à 8.

12. Système logistique, comprenant :
le dispositif informatique (130) selon la revendication 10 ;
un tapis roulant (110) ;
un dispositif d'acquisition de données de nuage de points (120), configuré pour acquérir des données de nuage de points d'un colis se trouvant sur le tapis roulant (110).

13. Produit logiciel comprenant des instructions qui, lorsqu'elles sont exécutées sur un ordinateur, amènent celui-ci à mettre en œuvre le procédé selon l'une quelconque des revendications 1 à 8.
